# EUROPÄISCHE PATENTSCHRIFT

(11) **EP 2 801 493 B1**
(45) Veröffentlichungstag und Bekanntmachung des Hinweises auf die Patenterteilung: **04.05.2016**
(21) Anmeldenummer: 14158565.3
(22) Anmeldetag: 10.03.2014
(51) Int. Cl.: B60J 10/70, B60J 1/00

(54) **Fenstersystem umfassend ein aus einem Elastomer hergestellten Scheibeneinfassrahmen für eine Fensterglasscheibe sowie einen Fensterausschnittsrahmen zur Aufnahme des Scheibeneinfassrahmens**
Window system comprising a pane enclosure frame made from an elastomer for a glass window and a window section frame for mounting the pane enclosure frame
Système de vitre comprenant un cadre d'enchâssement de vitre fabriqué à partir d'un élastomère pour une vitre en verre et un cadre d'ouverture de vitre pour le logement du cadre d'enchâssement de vitre

(30) Priorität: 10.05.2013 DE 202013004316 U
(43) Veröffentlichungstag der Anmeldung: 12.11.2014
(73) Patentinhaber: Hübner GmbH & Co. KG, 34123 Kassel (DE)
(72) Erfinder: Federov, Johann, 34123 Kassel (DE); Bauerfeind, Gerald, 34388 Trendelburg (DE); Rintsch, Andreas, 34277 Fuldabrück (DE)
(74) Vertreter: Walther, Robert

(56) Entgegenhaltungen:
- CA-A1- 1 218 089
- FR-A1- 2 684 051
- US-A- 4 835 927

## Beschreibung

Die Erfindung betrifft ein Fenstersystem umfassend einen aus einem Elastomer hergestellten Scheibeneinfassrahmen für eine Fensterglasscheibe sowie einen Fensterausschnittsrahmen zur Aufnahme des Scheibeneinfassrahmens, wobei der Fensterausschnittsrahmen einen umlaufenden Einfassschenkel mit mindestens einer auf den Scheibeneinfassrahmen zugerichteten Rippe aufweist.

Die CA 1 218 089 A beschreibt ein Fenstersystem mit einem Scheibeneinfassrahmen und einem Fensterausschnittsrahmen. Der Fensterausschnittsrahmen zeigt einen Steg, wobei der Scheibeneinfassrahmen eine zur Aufnahme des Stegs entsprechende Aussparung besitzt, wobei der Scheibeneinfassrahmen im Bereich der Aussparung ein eirigespritztes U-Profil aufweist, das die Aussparung umgibt.

Aus der FR 2 684 051 A ist ein Scheibeneinfassrahmen bekannt, umfassend einen mit einem Elastomer ummantelten Profilkörper. Der Profilkörper umfasst eine Aussparung zur Befestigung am Wagenkasten. Des Weiteren zeigt der Scheibeneinfassrahmen einen abklappbaren Schenkel zur Fixierung einer Fensterglasscheibe in dem Scheibeneinfassrahmen.

Ein Fenstersystem der eingangs genannten Art ist aus dem Stand der Technik bei Fahrzeugen bekannt. So weisen die Wagenkästen schienenoder straßengebundener Fahrzeuge Fensterausschnitte auf, wobei der in dem Wagenkasten angeordnete Fensterausschnitt einen Fensterausschnittsrahmen aufweist, der der Aufnahme des Scheibeneinfassrahmens dient, wobei der Scheibeneinfassrahmen als Elastomerprofil der Aufnahme der Fensterglasscheibe dient. Der Fensterausschnittsrahmen, insbesondere als Bestandteil des Wagenkastens weist, wie bereits ausgeführt, einen Einfassschenkel auf, der entsprechend dem Fensterausschnitt umlaufend in dem Fensterausschnitt verläuft. Der Einfassschenkel besitzt auf seiner dem Scheibeneinfassrahmen zugerichteten Seite eine Rippe, wobei korrespondierend hierzu der Scheibeneinfassrahmen eine entsprechende Ausnehmung aufweist. Hieraus wird deutlich, dass durch die Rippe der Scheibeneinfassrahmen in dem Fensterausschnittsrahmen gehalten ist. Es hat sich nun allerdings herausgestellt, dass der Scheibeneinfassrahmen in dem Fensterausschnittsrahmen eine hohe Beweglichkeit in Richtung senkrecht zur Fensterglasscheibenebene aufweist.

Die der Erfindung zugrunde liegende Aufgabe besteht demzufolge darin, für eine Versteifung des Scheibeneinfassrahmens in dem im Fensterausschnittsrahmen einsitzenden Zustand zu sorgen. Insbesondere soll die Beweglichkeit der Fensterglasscheibe in dem im Scheibeneinfassrahmen eingesetzten Zustand bei Belastung senkrecht auf die Fensterglasscheibe eingeschränkt werden. Eine solche Einschränkung der seitlichen Beweglichkeit der Fensterglasscheibe in dem Scheibeneinfassrahmen ist insbesondere relevant für höhere Geschwindigkeiten, wenn nämlich durch Druckstöße, wie sie auftreten, wenn derartige Züge sich bei höherer Geschwindigkeit begegnen oder wie sie bei Einfahrt in einen Tunnel entstehen, Drücke im Fahrzeuginnern erzeugt werden, die für Passagiere unangenehm sind. Die der Erfindung zugrunde liegende Aufgabe besteht demzufolge darin, derartige Druckstöße in den Fahrzeuginnenraum zu vermeiden oder zumindest die Druckstöße zu vermindern.

Zur Lösung der Aufgabe wird erfindungsgemäß vorgeschlagen, dass in dem Scheibeneinfassrahmen im Bereich der Rippe ein Versteifungselement anordbar ist, wobei der Scheibeneinfassrahmen im Bereich des Versteifungselements einen abklappbaren Schenkel aufweist, wobei der Scheibeneinfassrahmen eine beabstanded um die Rippe sich erstreckende Aufnahme für das U-förmige Versteifungselement (22) aufweist, wobei das U-förmige Versteifungselement (22) in die Aufnahme (20) bei abgeklappter Stellung des Schenkels eingeführt wird. Durch das Versteifungselement wird einerseits der aus einem Elastomer, z.B. einem TPU hergestellte Scheibeneinfassrahmen in sich versteift, andererseits findet aber auch eine Versteifung der Verbindung zu dem Fensterausschnittsrahmen über die besagte Rippe des Fensterausschnittsrahmens statt. Dies mit der Folge, dass Auslenkungen der Fensterglasscheibe senkrecht zur Scheibenebene bei von außen einwirkenden Druckstößen vermindert werden.

So ist insbesondere vorgesehen, dass die Rippe umlaufend auf dem Einfassschenkel angeordnet ist, d. h., dass bei einem zum Beispiel rechteckigen Fensterausschnitt alle vier Einfassschenkel des Fensterausschnittsrahmens eine solche Rippe aufweisen, bzw. über einen wesentlichen Teil ihrer jeweiligen Länge mit einer derartigen Rippe versehen sind. Hierdurch wird insbesondere zum einen ein sicherer Halt des Scheibeneinfassrahmens in dem Fensterausschnittsrahmen bewerkstelligt und zum Anderen die Auslenkungen der Fensterglasscheibe verringert.

Nach einem weiteren Merkmal ist das Versteifungselement umlaufend in den Scheibeneinfassrahmen einsetzbar. Hieraus wird deutlich, dass das Versteifungselement der umlaufenden Kontur des Scheibeneinfassrahmens folgend ebenfalls umlaufend in dem Scheibeneinfassrahmen angeordnet ist.

Das Versteifungselement, z. B. aus Metall, ist im Querschnitt in etwa U-förmig ausgebildet, und umgibt die Rippe zumindest partiell. Das U-förmige Versteifungselement, das somit nach Art einer Klammer ausgebildet ist, ist in dem aus einem Elastomer ausgebildeten Scheibeneinfassrahmen in eine entsprechende Ausnehmung in dem Scheibeneinfassrahmen eingesetzt. D. h., dass das Versteifungselement nicht unmittelbar an der Rippe anliegt, sondern seine Klemmkraft über das Elastomermaterial des Scheibeneinfassrahmens auf die Rippe ausübt.

Der Scheibeneinfassrahmen weist im Bereich des Versteifungselementes einen abklappbaren Schenkel auf, wobei im abgeklappten Zustand des Schenkels, d. h. bei nicht eingesetzter Fensterglasscheibe das Versteifungselement in die entsprechende Ausnehmung in dem aus einem Elastomer hergestellten Scheibeneinfassrahmen einführbar ist.

Vorteilhafte Merkmale und Ausgestaltungen der Erfindung ergeben sich aus den Unteransprüchen.

Um den Schenkel des Scheibeneinfassrahmens abzuklappen, weist der Scheibeneinfassrahmen ein Filmscharnier auf. D. h. der Scheibeneinfassrahmen zeigt in einem bestimmten Bereich im Übergang des abklappbaren Schenkels zum Scheibeneinfassrahmen eine Querschnittsverminderung auf.

Die Fixierung des abklappbaren Schenkels im auf den Scheibeneinfassrahmen zugeklappten Zustand wird durch die in den Scheibeneinfassrahmen eingesetzte Fensterglasscheibe bewerkstelligt. D. h., dass die Fensterglasscheibe dafür sorgt, dass der abklappbare Schenkel des Scheibeneinfassrahmens in Geschlossen-Stellung gehalten wird.

Nach einem weiteren Merkmal der Erfindung ist die Rippe mit dem Scheibeneinfassrahmen rastend verbunden. Hierzu weist im Einzelnen die Rippe einen widerhakenden Absatz auf, der in Eingriff mit dem umgebenden Scheibeneinfassrahmen steht. Hierdurch wird erreicht, dass der Scheibeneinfassrahmen im eingesetzten Zustand tatsächlich stabil mit dem Fensterausschnittsrahmen verbunden ist.

Zur Fixierung des Scheibeneinfassrahmens in dem Fensterausschnittsrahmen weist der Scheibeneinfassrahmen ein Kederprofil auf. Dieses Kederprofil ist vorzugsweise umlaufend in den Scheibeneinfassrahmen einsetzbar. Hierzu weist der Scheibeneinsatzrahmen eine entsprechende Kederaufnahme auf, in die das Kederprofil eingeschlagen oder eingedrückt wird. Im Wirkbereich des Kederprofils, das auch als Füllerprofil bezeichnet werden kann, weist der Einfassschenkel des Fensterausschnittsrahmens auf der dem Scheibeneinfassrahmen zugerichteten Seite eine Rastung in Form von Zähnen auf, sodass der Scheibeneinfassrahmen durch das Kederprofil, wenn dieses in der Kederaufnahme einsitzt, gegen diese Zähne gedrückt, und dadurch auf dem Einfassschenkel des Fensterausschnittsrahmens sicher fixiert ist. Nach einem weiteren besonderen Merkmal der Erfindung ist vorgesehen, dass die Fensterglasscheibe im Bereich der Aufnahme durch den Scheibeneinfassrahmen stirnseitig stufenförmig ausgebildet ist. Hierbei steht der längere Schenkel der stirnseitig stufenförmig ausgebildeten Fensterglasscheibe mit dem abklappbaren Schenkel des Scheibeneinfassrahmens in Verbindung, d. h., dass durch den längeren Schenkel der Fensterglasscheibe der abklappbare Schenkel des Scheibeneinfassrahmens in Geschlossen-Stellung gehalten wird.

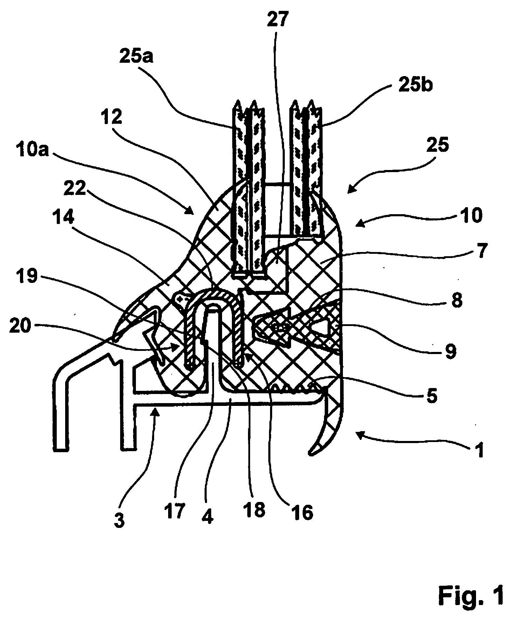

Anhand der Zeichnung wird die Erfindung nachstehend beispielhaft näher erläutert. Die einzige Figur zeigt das Fenstersystem 1 in einer Schnittdarstellung. Das Fenstersystem 1 umfasst den Fensterausschnittsrahmen 3 sowie den Scheibeneinfassrahmen 7. Der Fensterausschnittsrahmen 3 ist Bestandteil des Wagenkastens oder der Karosserie des Fahrzeugs, insbesondere des Wagenkastens eines Schienenfahrzeugs, und hier insbesondere eines Hochgeschwindigkeitsschienenfahrzeugs. Mit dem Pfeil 9 ist hierbei die Seite gekennzeichnet, die auf das Innere des Fahrzeugs zugerichtet ist; der Pfeil 10 bezeichnet die Außenseite des Fahrzeugs.

Der Scheibeneinfassrahmen 7 zeigt den abklappbaren Schenkel 12, wobei der abklappbare Schenkel 12 über das Filmscharnier 14 mit dem Scheibeneinfassrahmen, der aus einem Elastomer, z. B. einem TPU oder EPDM besteht, verbunden ist. D. h., dass im Bereich des Filmscharniers 14 der Materialquerschnitt im Übergang von dem abklappbaren Schenkel zum Scheibeneinfassrahmen vermindert ist. Der Fensterausschnittsrahmen 3 weist eine in Richtung des Scheibeneinfassrahmens 7 ausgerichtete Rippe 17 auf. Aufgenommen wird die Rippe durch eine Rippenausnehmung 16 im Scheibeneinfassrahmen. Die Rippe 17 besitzt einen widerhakenden Abschnitt 18, der mit einem entsprechenden korrespondierenden Absatz 19 in dem aus einem Elastomer hergestellten Scheibeneinfassrahmen zusammenwirkt. Im Bereich der Rippe 17 weist der Scheibeneinfassrahmen 7 eine beabstandet um die Rippe 17 sich erstreckende Aufnahme 20 für das U-förmige Versteifungselement 22. Das U-förmige Versteifungselement 22, das insofern nach Art einer Klammer ausgebildet ist, wird in die Aufnahme 20 bei abgeklappter Stellung des Schenkels 12 eingeführt. Die Aufnahme 20 erstreckt sich vorteilhaft ebenso wie das Versteifungselement 22 umlaufend über dem Umfang des Fensterausschnittsrahmens. D. h., bei einem rechteckigen Fensterausschnittsrahmen gibt es schlussendlich vier einzelne, längliche aus z. B. Aluminium hergestellte Versteifungselemente 22, die in die Aufnahme 20 über die Rippe 17 geschoben werden.

In der einzigen Darstellung ist der Scheibeneinfassrahmen 7 im zugeklappten Zustand des abklappbaren Schenkels 12 dargestellt. Erkennbar ist, dass die Fensterglasscheibe 25 als Doppelglasscheibe zwei Fensterscheiben 25a, 25b aufweist, wobei die Scheibe 25a umlaufend einen Überstand gegenüber der Scheibe 25b besitzt, also zwischen beiden Fensterscheiben eine Stufe gebildet ist. Die Scheibe 25a sorgt hierbei durch Druck auf den Arm 27 des abklappbaren Schenkels 12, dass im zusammengebauten Zustand des Fenstersystems 1 der abklappbare Schenkel 12 im auf die Fensterglasscheibe 25 zugeklappten Zustand verbleibt.

Der Fensterausschnittsrahmen 3 weist den Einfassschenkel 4 auf. Der Einfassschenkel 4, der ebenso umlaufend verläuft, wie der Fensterausschnittsrahmen 3, besitzt auf der dem Scheibeneinfassrahmen 7 zugewandten Seite die Rastung 5 in Form von einzelnen Zähnen. Der Scheibeneinfassrahmen 7 zeigt darüber hinaus eine Kederaufnahme 8 zur Aufnahme des Kederprofils 9. Im in die Kederaufnahme 8 eingeschlagenen Zustand des Kederprofils 9 wird der Scheibeneinfassrahmen 7 gegen die Rastung 5 gedrückt, und hierdurch sicher auf dem Einfassschenkel 4 gehalten. Gleichfalls wird durch das Kederprofil 9 auch der Arm 27 des abklappbaren Schenkels 12 gegen die Scheibe 25a gedrückt, und auf diese Weise die Fensterglasscheibe 25 als Ganzes sicher gehalten.

Für die Montage wird nun so vorgegangen, dass zunächst der Scheibeneinfassrahmen 7 mit dem Fensterausschnittsrahmen 3 verbunden wird. Hierbei liegt dann die Rippe 17 in der Rippenausnehmung 16 des Scheibeneinfassrahmens 7. Alsdann wird der abklappbare Schenkel 12 auf die Innenseite des Fahrzeugs zu ausgeklappt, um das Versteifungselement 22 in die Aufnahme 20 einzuführen oder einzudrücken. Im Folgenden wird der abklappbare Schenkel 12 zugeklappt, wobei die Stellung der in der Zeichnung entspricht. Alsdann wird die Fensterglasscheibe 25 eingesetzt, wobei das Einsetzen der Fensterglasscheibe 25 von der Außenseite (Pfeil 10) erfolgt. Die Fensterglasscheibe sitzt hierbei mit der Fensterscheibe 25a auf dem Arm 27 auf, der Teil des Scheibeneinfassrahmens ist. Nach erfolgter Montage der Fensterglasscheibe 25 wird das Kederprofil 9 in die Kederaufnahme 8 eingeschlagen.

### Bezugszeichenliste:

- 1: Fenstersystem
- 3: Fensterausschnittsrahmen
- 4: Einfassschenkel
- 5: Rastung
- 7: Scheibeneinfassrahmen
- 8: Kederaufnahme
- 9: Kederprofil
- 10: Pfeil (Innenseite)
- 10a: Pfeil (Außenseite)
- 12: abklappbarer Schenkel
- 14: Filmscharnier
- 16: Rippenausnehmung
- 17: Rippe
- 18: widerhakender Abschnitt
- 19: Absatz für den widerhakenden Abschnitt
- 20: Aufnahme
- 22: Versteifungselement
- 25: Fensterglasscheibe
- 25a, 25b: Fensterscheibe
- 27: Arm

## Patentansprüche

1. Fenstersystem (1) umfassend ein aus einem Elastomer hergestellten Scheibeneinfassrahmen (7) für eine Fensterglasscheibe (25), sowie einen Fensterausschnittsrahmen (3) zur Aufnahme des Scheibeneinfassrahmens (7), wobei der Fensterausschnittsrahmen (3) einen umlaufenden Einfassschenkel (4) mit einer auf den Scheibeneinfassrahmen (7) zugerichteten Rippe (17) aufweist, wobei in dem Scheibeneinfassrahmen (7) im Bereich der Rippe (17) ein Versteifungselement (22) anordbar ist,
wobei der Scheibenfassrahmen im Bereich des Versteifungselements (22) einen abklappbaren Schenkel (12) aufweist, **dadurch gekennzeichnet, dass**
der Scheibeneinfassrahmen (7) eine beabstandet um die Rippe (17) sich erstreckende Aufnahme (20) für das U-förmige Versteifungselement (22) aufweist, wobei das U-förmige Versteifungselement (22) in die Aufnahme (20) bei abgeklappter Stellung des Schenkels (12) eingeführt wird.

2. Fenstersystem (1) nach Anspruch 1,
**dadurch gekennzeichnet,**
**dass** die Rippe (17) umlaufend auf dem Einfassschenkel (4) angeordnet ist.

3. Fenstersystem (1) nach Anspruch 1 oder 2,
**dadurch gekennzeichnet,**
**dass** das Versteifungselement (22) umlaufend in den Scheibeneinfassrahmen (7) einsetzbar ist.

4. Fenstersystem (1) nach einem der vorangehenden Ansprüche,
**dadurch gekennzeichnet,**
**dass** das Versteifungselement (22) im Querschnitt in etwa U-förmig ausgebildet ist, und die Rippe (17) zumindest partiell umgibt.

5. Fenstersystem (1) nach einem der vorangehenden Ansprüche,
**dadurch gekennzeichnet,**
**dass** das Versteifungselement (22) aus einem Metall ausgebildet ist.

6. Fenstersystem (1) nach einem der voranstehenden Ansprüche,
**dadurch gekennzeichnet,**
**dass** der Scheibeneinfassrahmen (7) im Bereich des abklappbaren Schenkels (12) ein Filmscharnier (14) aufweist.

7. Fenstersystem (1) nach einem der voranstehenden Ansprüche,
**dadurch gekennzeichnet,**
**dass** der abklappbare Schenkel (12) durch die Fensterglasscheibe (25) in Geschlossen-Stellung gehalten wird.

8. Fenstersystem (1) nach einem der vorangehenden Ansprüche,
**dadurch gekennzeichnet,**
**dass** die Rippe (17) mit dem Scheibeneinfassrahmen (7) rastend verbunden ist.

9. Fenstersystem (1) nach einem der vorangehenden Ansprüche,
**dadurch gekennzeichnet,**
**dass** zur Fixierung des Scheibeneinfassrahmens (7) in dem Fensterausschnittsrahmen (3) der Scheibeneinfassrahmen (7) ein Kederprofil (9) aufweist.

10. Fenstersystem (1) nach Anspruch 9,
**dadurch gekennzeichnet,**
**dass** das Kederprofil (9) umlaufend in den Scheibeneinfassrahmen (7) einsetzbar ist.

11. Fenstersystem (1) nach Anspruch 9 oder 10,
**dadurch gekennzeichnet,**
**dass** der Einfassschenkel (4) des Fensterausschnittsrahmens (3) im Wirkbereich des Kederprofils (9) auf der dem Scheibeneinfassrahmen (7) zugerichteten Seite eine Rastung (5) aufweist.

12. Fenstersystem (1) nach einem der vorangehenden Ansprüche,
**dadurch gekennzeichnet,**
**dass** die Fensterglasscheibe (25) im Bereich der Aufnahme (20) durch den Scheibeneinfassrahmen (7) stirnseitig stufenförmig umlaufend ausgebildet ist.

13. Fenstersystem (1) nach Anspruch 12,
**dadurch gekennzeichnet,**
**dass** der längere Schenkel der stirnseitig stufenförmig umlaufend ausgebildeten Fensterglasscheibe (25) mit dem abklappbaren Schenkel (12) des Scheibeneinfassrahmens (7) in Verbindung steht.

14. Fenstersystem (1) nach einem der vorangehenden Ansprüche,
**dadurch gekennzeichnet,**
**dass** der Fensterausschnittsrahmen (3) Teil des Wagenkastens ist.

## Claims

1. A window system (1) comprising a pane enclosure frame (7) made from an elastomer for a glass window pane (25), and a window aperture frame (3) for receiving the pane enclosure frame (7), wherein the window aperture frame (3) comprises a circumferential enclosing frame piece (4) with a rib (17) oriented toward the pane enclosure frame (7), wherein
a stiffening element (22) is installable in the pane enclosure frame (7) in the area of the rib (17),
wherein the pane enclosure frame comprises a hinged frame piece (12) in the area of the stiffening element (22),
**characterized in that**
the pane enclosure frame (7) comprises a receptacle (20), extending around the rib (17) at a distance from it, for the U-shaped stiffening element (22), wherein the U-shaped stiffening element (22) is inserted into the receptacle (20) in a folded position of the frame piece (12).

2. The window system (1) according to claim 1,
**characterized in that**
the rib (17) is circumferentially disposed on the enclosing frame piece (4).

3. The window system (1) according to claim 1 or 2,
**characterized in that**
the stiffening element (22) is circumferentially insertable into the pane enclosure frame (7).

4. The window system (1) according to one of the afore-mentioned claims,
**characterized in that**
the stiffening element (22) is cross-sectionally approximately U-shaped and at least partially surrounds the rib (17).

5. The window system (1) according to one of the afore-mentioned claims,
**characterized in that**
the stiffening element (22) is made of a metal.

6. The window system (1) according to one of the afore-mentioned claims,
**characterized in that**
the pane enclosure frame (7) comprises a film hinge (14) in the area of the hinged frame piece (12).

7. The window system (1) according to one of the afore-mentioned claims,
**characterized in that**
the hinged frame piece (12) is held in the closed position by the window glass pane (25).

8. The window system (1) according to one of the afore-mentioned claims,
**characterized in that**
the rib (17) is connected to the pane enclosure frame (7) in a locking manner.

9. The window system (1) according to one of the afore-mentioned claims,
**characterized in that**
in order to fasten the pane enclosure frame (7) in the window aperture frame (3), the pane enclosure frame (7) comprises a keder profile (9).

10. The window system (1) according to claim 9,
**characterized in that**
the keder profile (9) is circumferentially insertable into the pane enclosure frame (7).

11. The window system (1) according to claim 9 or 10,
**characterized in that**
the enclosing frame piece (4) of the window aperture frame (3) has a catch (5) in the operating region of the keder profile (9) on the side oriented toward the pane enclosure frame (7).

12. The window system (1) according to one of the afore-mentioned claims,
**characterized in that**
the window glass pane (25) is designed so that it is circumferentially stepped on its front side in the area of the receptacle (20) in the pane enclosure frame (7).

13. The window system (1) according to claim 12,
**characterized in that**
the longer side of the window glass pane (25) designed so that it is circumferentially stepped on its front side is connected with the hinged frame piece (12) of the pane enclosure frame (7).

14. The window system (1) according to one of the afore-mentioned claims,
**characterized in that**
the window aperture frame (3) is part of the coach body.

## Revendications

1. Système de fenêtre (1) comportant un cadre d'enchâssement de vitre (7) fabriqué à partir d'un elastomère pour une vitre de fenêtre (25), ainsi qu'un cadre de découpe de fenêtre (3) pour recevoir le cadre d'enchâssement de vitre (7), où le cadre de découpe de fenêtre (3) comporte une branche d'enchâssement (4) périphérique avec une nervure (17) orientée vers le cadre d'enchâssement de vitre (7), où
un élément raidisseur (22) est apte à être disposé dans le cadre d'enchâssement de vitre (7) dans la région de la nervure (17),
où le cadre d'enchâssement de vitre comporte une branche rabattable (12) dans la région de l'élément raidisseur (22), **caractérisé en ce que**
le cadre d'enchâssement de vitre (7) comporte un logement (20) pour l'élément raidisseur (22) en forme de U s'étendant à distance autour de la nervure (17), où l'élément raidisseur (22) en forme de U est inséré dans le logement (20) dans la position rabattue de la branche (12).

2. Système de fenêtre (1) selon la revendication 1,
**caractérisé en ce que**
la nervure (17) est disposée sur tout le pourtour sur la branche d'enchâssement (4).

3. Système de fenêtre (1) selon la revendication 1 ou 2,
**caractérisé en ce que**
l'élément raidisseur (22) est insérable dans le cadre d'enchâssement de vitre (7) sur tout le pourtour.

4. Système de fenêtre (1) selon l'une quelconque des revendications précédentes,
**caractérisé en ce que**
l'élément raidisseur (22) a une section approximativement en forme de U et entoure au moins partiellement la nervure (17).

5. Système de fenêtre (1) selon l'une quelconque des revendications précédentes, **caractérisé en ce que**
l'élément raidisseur (22) est réalisé en un métal.

6. Système de fenêtre (1) selon l'une quelconque des revendications précédentes, **caractérisé en ce que**
le cadre d'enchâssement de vitre (7) comporte un film-charnière (14) dans la région de la branche rabattable (12).

7. Système de fenêtre (1) selon l'une quelconque des revendications précédentes, **caractérisé en ce que**
la branche rabattable (12) est maintenue dans la position fermée par la vitre de fenêtre (25).

8. Système de fenêtre (1) selon l'une quelconque des revendications précédentes, **caractérisé en ce que**
la nervure (17) est reliée par enclenchement avec le cadre d'enchâssement de vitre (7).

9. Système de fenêtre (1) selon l'une quelconque des revendications précédentes, **caractérisé en ce que**
le cadre d'enchâssement de vitre (7) comporte un profil à bourrelet (9) pour la fixation du cadre d'enchâssement de vitre (7) dans le cadre de découpe de fenêtre (3).

10. Système de fenêtre (1) selon la revendication 9,
**caractérisé en ce que**
le profil à bourrelet (9) est insérable dans le cadre d'enchâssement de vitre (7) sur tout le pourtour.

11. Système de fenêtre (1) selon la revendication 9 ou 10,
**caractérisé en ce que**
la branche d'enchâssement (4) du cadre de découpe de fenêtre (3) comporte un crantage (5) dans la zone fonctionnelle du profil à bourrelet (9) sur le côté orienté vers le cadre d'enchâssement de vitre (7).

12. Système de fenêtre (1) selon l'une quelconque des revendications précédentes, **caractérisé en ce que**
la vitre de fenêtre (25) est réalisée selon une forme étagée sur son côté avant dans la région de sa réception (20) par le cadre d'enchâssement de vitre (7).

13. Système de fenêtre selon la revendication 12,
**caractérisé en ce que**
le côté le plus long de la vitre de fenêtre (25) réalisée selon une forme étagée sur son côté avant est relié à la branche rabattable (12) du cadre d'enchâssement de vitre (7).

14. Système de fenêtre (1) selon l'une quelconque des revendications précédentes, **caractérisé en ce que**
le cadre de découpe de fenêtre (3) fait partie de la carrosserie.
